# EUROPÄISCHE PATENTANMELDUNG

(11) **EP 1 316 930 A2**
(43) Veröffentlichungstag der Anmeldung: **04.06.2003**
(21) Anmeldenummer: 02026658.1
(22) Anmeldetag: 29.11.2002
(51) Int. Cl.: G07F 19/00

(54) **Moduleinheit für Warenausgabe-/ Dienstleistungsautomaten**

(30) Priorität: 01.12.2001 EP 01128701
(71) Anmelder: SCHEIDT & BACHMANN GMBH, D-41238 Mönchengladbach (DE)
(72) Erfinder: Miller, Norbert Dr., 41063 Mönchengladbach (DE)
(74) Vertreter: Stenger, Watzke & Ring Patentanwälte

(57) **Zusammenfassung**

Die Erfindung betrifft eine Moduleinheit für Warenausgabe- / Dienstleistungsautomaten, die von einer Bedienperson unter Nutzung eines Mobilfunkendgerätes zur Kommunikation mit einer Zentralstelle und Verwendung einer übermittelten Codierung betreibbar sind, umfassend eine Displayeinheit, eine Eingabeeinheit, eine Schnittstelle für eine Rechner- und/oder Speichereinheit sowie eine Aktivierungseinheit, welche bei Betätigung die Moduleinheit von einem Ruhezustand in einen Betriebszustand schaltet. Damit wird die Aufgabe gelöst, eine Moduleinheit für Warenausgabe- / Dienstleistungsautomaten der gattungsgemäßen Art bereitzustellen, welche den Einsatz von Verfahren zur bargeldlosen Entwicklung von Automatennutzungsvorgängen unter Verwendung eines Mobilfunkendgerätes zur Kommunikation mit einer Zentralstelle ermöglichen, einen weitgehenden Schutz gegen Mißbrauch bei gleichzeitiger Erhöhung der Variabilität des Automateneinsatzes ermöglichen, mit geringem wirtschaftlichen Aufwand erstellbar und sowohl in der Erstausrüstung als auch in der Nachrüstung einsetzbar sind.

## Beschreibung

Die vorliegende Erfindung betrifft eine Moduleinheit für Warenausgabe- / Dienstleistungsautomaten, die von einer Bedienungsperson unter Nutzung eines Mobildfunkendgerätes zur Kommunikation mit einer Zentralstelle und Verwendung einer Codierung betreibbar sind.

Automaten für unterschiedlichste Nutzungsvorgänge sind umfangreich im Einsatz. Zum einen sind dies Automaten zur direkten Steuerung einer Warenausgabe, beispielsweise Nahrungs- und Genußmittel, Automaten zur Ausgabe von Snacks, Süßigkeiten, Zigaretten, Getränken und dergleichen, Automaten für die Ausgabe von Fahrausweisen, aber auch Automaten zur Ausgabe von Treibstoff an Tankstellen und dergleichen. Weiterhin sind Automaten für die Einräumung von Berechtigungen bekannt, beispielsweise zur Nutzung von Parkraum in Parkhäusern, Zugangsberechtigungen beispielsweise in Freizeitanlagen, Schwimmbädern und dergleichen oder Automaten für die Nutzungsberechtigung von Speicherraum, beispielsweise Schließfächer und dergleichen. Im Sinne der vorliegenden Erfindung wird die Bezeichnung "Automat" ganz allgemein auch für automatisierte Zahlungsvorgänge, also Zahlstellen und dergleichen verwendet. So können unter diesem Begriff auch Verkaufsstellen zusammengefaßt werden, bei welchen im Zusammenhang mit einer manuellen Warenentnahme im wesentlichen ein automatisierter erfindungsgemäßer Zahlungsvorgang stattfindet, sogenannte point of sale.

Der übliche Fall der Automatenbenutzung sieht den Einsatz von Bargeld vor, indem die gewünschte durch den Automaten zu realisierende Leistung unmittelbar durch das Eingeben des erforderlichen Betrages in den Automaten freigegeben wird. Für mögliche Umstellungen von Automaten auf einen bargeldlosen Nutzungsverkehr gibt es die unterschiedlichsten Ansätze. So sind Automaten auf die Nutzung von Kreditkarten umgestellt, wozu allerdings ein online-Betrieb der Automaten erforderlich ist, wenn z.B. die Bonität oder sonstige Zugangsvoraussetzungen / Nutzungsberechtigungsvoraussetzungen geprüft werden sollen. Auch nutzen Automaten betreiberseitige bargeldlose Zahlungssysteme, beispielsweise durch die Ausgabe von vorausbezahlten oder kreditierten Karten nach vorhergehender Identifikation des Nutzers gegenüber dem Betreiber.

Bei allen bargeldlosen Systemen ergibt sich das Problem der Eröffnung der Möglichkeit eines gesicherten Inkassovorganges und die direkte Zuordnung zu einem Automatennutzungsvorgang. Ein Nachteil der auf kreditkartenbezogenen Inkassovorgängen basierenden Lösungssysteme ist die Notwendigkeit des online-Betriebs der Automaten, wodurch eine aufwendige Rechner- und Installationstechnologie erforderlich ist. Darüber hinaus umfassen derartige Systeme Sicherheitsrisiken, da die Nutzerdaten auch zu Zwecken des Mißbrauchs abgezweigt werden können. Die übrigen Systeme setzen eine umfassende und Inkassovorgänge absichernde Vorabwicklung zwischen Betreiber und Nutzer voraus, wodurch die Variabilität der entsprechenden Automatennutzung auf durch den Betreiber vorgegebene Nutzungsbereiche eingeschränkt wird. Die Nutzer müssen daher für unterschiedliche Nutzungsbereiche unterschiedliche Karten, Kennungen und dergleichen vorhalten.

Die WO 01/45058 der Firma Coca - Cola offenbart ein System und ein Verfahren, bei welchem ein Verbraucher an einem Abgabeautomaten eine Telefonnummer erhält und diese anwählt. In einem Zentralserver wird dann ein Buchungssatz erstellt, gebucht und ein Ausgabecode errechnet und an den Verbraucher übersandt. Beim Verbraucheranruf wird somit der Buchungssatz erstellt und direkt zentralseitig abgewickelt. Nicht offenbart wird, was beispielsweise passiert, wenn der Verbraucher das Produkt nicht erhält oder entnimmt. Das Verfahren ist also mit dem Betreibersystem gekoppelt.

Es sind keine Verfahren bekannt, die die Variabilität in bezug auf Nutzungsberechtigungen nicht einschränken und die Automatennutzung vom Betreibersystem abkoppeln, sowie mit geringem administrativen Aufwand und ohne große vorausschauende Planung durch den Nutzer bei Einhaltung von erforderlichen Sicherheiten einsetzbar sind.

Es sind keine entsprechenden Automaten im Einsatz bzw. bekannt, die ein solches Verfahren realisieren. Dies liegt in erster Linie daran, daß weder Vorrichtungen zur Nachrüstung bereits vor Ort befindlicher Warenausgabe- / Dienstleistungsautomaten bekannt sind, noch wirtschaftlich sinnvoll einsetzbare Baueinheiten zur Erstellung entsprechender Automaten, ohne diese vollständig neu entwickeln zu müssen.

Ausgehend vom vorbeschriebenen Stand der Technik liegt der vorliegenden Erfindung die **Aufgabe** zugrunde, eine Moduleinheit für Warenausgabe- / Dienstleistungsautomaten der gattungsgemäßen Art bereitzustellen, welche den Einsatz von Verfahren zur bargeldlosen Entwicklung von Automatennutzungsvorgängen unter Verwendung eines Mobilfunkendgerätes zur Kommunikation mit einer Zentralstelle ermöglichen, einen weitgehenden Schutz gegen Mißbrauch bei gleichzeitiger Erhöhung der Variabilität des Automateneinsatzes ermöglichen, mit geringem wirtschaftlichen Aufwand erstellbar und sowohl in der Erstausrüstung als auch in der Nachrüstung einsetzbar sind.

Zur technischen **Lösung** dieser Aufgabe wird mit der Erfindung vorgeschlagen eine Moduleinheit, umfassend eine Displayeinheit, eine Eingabeeinheit, eine Schnittstelle für eine Rechner- und/oder Speichereinheit sowie eine Aktivierungseinheit, welche bei Betätigung die Moduleinheit von einem Ruhezustand in einen Betriebszustand schaltet.

Die erfindungsgemäße Moduleinheit ermöglicht die Erstausrüstung oder auch Nachrüstung von Warenausgabe- / Dienstleistungsautomaten sowie Verkaufsstellen der eingangs beschriebenen Art. Sie umfaßt als eigenständige Baugruppe einerseits die Mittel zur Kommunikation mit dem Benutzer, andererseits die Mittel zur Kommunikation mit den automatenseitigen Einheiten.

Zur Kommunikation mit dem Benutzer sind wenigstens eine Displayeinheit und eine Eingabeeinheit vorgesehen. Zur Kommunikation mit dem Automaten sind Datenschnittstellen bzw. digitale Schnittstellen vorgesehen. Eine Aktivierungseinheit ermöglicht es, die erfindungsgemäße Moduleinheit zwischen einem Ruhezustand und einem Betriebszustand umzuschalten.

Als Displayeinheit kommen mindestens zweizeilige digitale Anzeigeeinheiten in Betracht, wobei mindestens zweizeilig funktional zu verstehen ist. Wesentlich ist, daß unterschiedliche Displaybereiche gebildet sind, ob diese nun untereinander, nebeneinander oder wie auch immer gruppiert sind. Dabei dient der eine Displaybereich zur Anzeige von Automateninformationen, der andere zur Darstellung der Benutzereingaben. Gemäß einem Vorschlag der Erfindung wird die Displayeinheit durch einen Monitor gebildet. Als Eingabeeinheit für den Benutzer kann eine Tastatur oder eine Mouseeinheit dargestellt werden. Gemäß einem vorteilhaften Vorschlag der Erfindung können die Displayeinheit und die Eingabeeinheit durch einen sogenannten Touchscreen integriert werden. Dieser ermöglicht die Darstellung von Eingabetastaturen oder auch Auswahlmatritzen einerseits sowie die Darstellung automatenseitiger Informationen.

Als Eingabeeinheiten kommen auch externe vorzugsweise berührungslose Schnittstellen in Betracht wie beispielsweise Infrarotschnittstellen, bluetooth-Funkschnittstellen und dergleichen, welche gegebenenfalls für die direkte Kommunikation mit dem Mobilfunkendgerät eines Benutzers, beispielsweise einem Handy oder einem speziellen Betriebselement, verwendet werden können.

Als interne Schnittstellen zu automatenseitigen Einheiten kommen Standardschnittstellen in Betracht. Solche Standardschnittstellen umfassen berührungslose Schnittstellen wie Infrarot, Funknetz oder dergleichen, Standardschnittstellen wie eine serielle Schnittstelle (RS232), welche die Verwendung eines standardisierten V11-Sicherheitsprotokolls unterstützt, im Automatenbereich für die Betriebsabwicklung verwendete sogenannte I²C-BUS-Schnittstellen, MD-BUS-Schnittstellen und dergleichen.

Die Moduleinheit kann so ausgelegt sein, daß sie einen Automatenseitig vorhandenen Rechner, eine automatenseitige Speichereinheit und ggf. auch eine automatenseitig vorhandene Anzeige bzw. Touchscreen für Ihre Aufgaben nutzt. Auch kann die Moduleinheit mit eigenem Rechner und/oder Speichereinheiten versehen sein, was die Nachrüstbarkeit unterstützt, die Montage, die Integration und auch ein Auswechseln sowie Wartungsarbeit.

Als Aktivierungseinheit kommen gemäß Vorschlägen der Erfindung Tasten, Touchscreens, Näherungssensoren und dergleichen in Betracht. Die Aktivierungseinheit sorgt dafür, bei Aktivierung die Moduleinheit von einem Ruhezustand in einen Betriebszustand zu versetzen.

Gemäß einem vorteilhaften Vorschlag der Erfindung umfaßt die Moduleinheit optische und/oder akustische Reizmittel, um die Aufmerksamkeit von Bedienpersonen auf den Automaten bzw. die Bedieneinheit zu ziehen. Hierbei kann es sich beispielsweise auch um im Ruhezustand der Moduleinheit auf den Monitor angezeigte Werbungsinformationen handeln, um Leuchtreklamen oder auch einfache Lichtreize, beispielsweise LED-Einheiten usw.

In vorteilhafter Weise kann die Moduleinheit in einem gekapselten Gehäuse angeordnet sein, welches einfach über eine innere Schnittstelle mit dem Automaten verbindbar und in dessen Gehäuse integrierbar ist. Dies hat den Vorteil der vereinfachten Montage, Wartung, Auswechselung und dergleichen.

Gemäß einem weiteren vorteilhaften Vorschlag umfaßt die Moduleinheit eine Softwaresteuerung, die wesentliche Betriebsabläufe wie Umschalten von Ruhe-Inbetriebszustand, Durchführung der Kommunikation in Form von Anzeige und Empfang, Durchführung der inneren Organisation von Rechner- und Speichereinheiten, ob diese nun Bestandteil der Moduleinheit oder genutzte Fremdeinheiten des Automaten sind, sowie Abwickeln oder Initiieren der Betriebsabläufe des Automaten zur Warenausgabe.

Durch den Einsatz der erfindungsgemäßen Moduleinheit können beliebige Automaten ohne direkte Kommunikationsverbindung zu einer Zentralstelle, einer Abgleichstelle oder dergleichen für beliebige Zwecke wie Produktausgabe, Ausgabe von Berechtigungsausweisen, Nutzungsberechtigungen und dergleichen eingesetzt werden. Ein solcher offline-Automat, der selbstverständlich für die herkömmlichen Zahlungsweisen wie Bargeld, Kreditkarte und dergleichen eingerichtet sein kann, weist bei Auswahl der erfindungsgemäßen Abwicklungsform eine Telefonnummer aus. Mittels eines Mobilfunkendgerätes wählt der Nutzer diese Telefonnummer an. In einer Zentralstelle, einem sogenannten offline-payment-Server, wird die eingehende Mobilfunknummer empfangen. Unter Umständen setzt dies eine entsprechende Freigabe der Anzeige der Absendernummer durch den Nutzer in seinem Mobilfunkgerät voraus, wobei es sich jedoch um einen von der vorliegenden Erfindung unabhängigen bekannten Stand der Technik handelt. Es ist anzumerken, daß es nicht zu einer kostenpflichtigen Kommunikationsverbindung zwischen dem Nutzer und der Zentralstelle kommen muß, denn es genügt, wenn die Zentralstelle den Anrufer anhand der eingehenden Nummer identifizieren kann. Da der Nutzer die Nummer vom Automaten entnommen hat, ist zentralstellenseitig bereits eine direkte Zuordnung von beabsichtigter Nutzung einerseits und der möglichen Nutzungsart des Automaten andererseits ohne weiteres möglich. Entweder erfolgt dies dadurch, daß eine Zentralstelle ohnehin nur für ganz bestimmte Automaten - und damit Nutzungstypen - eingerichtet ist, oder durch eine in der Zentralstelle hinterlegte Datenbank in bezug auf die möglichen Anwahlnummern. Nach der Anwahl des offline-payment-Servers ist dort also die Information vorhanden, daß der registrierte Nutzer des Mobilfunkendgerätes eine bestimmte vorgegebene Nutzungsberechtigung eines durch die Anwahlnummer identifizierten Automaten erlangen möchte. Zentralstellenseitig wird nunmehr ein Abwicklungscode zusammengestellt und beispielsweise in Form einer SMS an das Mobilfunkendgerät des Nutzers übermittelt. Alternativ zu einer SMS können beispielsweise Sprachansagen, WAP-Übertragungen oder dergleichen verwendet werden. Der Abwicklungscode ist auf die beabsichtigte Nutzungsart und den zu benutzenden Automaten abgestimmt. Der den Abwicklungscode empfangende Nutzer gibt diesen Abwicklungscode nunmehr in den Automaten ein. Der dortige Rechner ist nun in der Lage, anhand des Abwicklungscodes nutzungsbezogene Informationen zu ermitteln und den Automaten für eine bestimmte Nutzungsart freizugeben. Der Nutzer kann nun die gewünschte Nutzungsberechtigung einlösen, d. h. Produkte entnehmen, eine Abbuchung bestätigen, eine Berechtigung realisieren oder dergleichen.

Über die erfindungsgemäße Moduleinheit werden nun Informationen gespeichert, die den eingegebenen Code einerseits und die durchgeführte Nutzung andererseits umfassen. In der Zentralstelle ist dem Abwicklungscode die Mobilfunknummer des Betreibers zugeordnet. Es ist nunmehr möglich, im einfachen offline-Transaktionsbetrieb einen Inkassovorgang in bezug auf die durchgeführte Nutzung durchzuführen. Hierzu stehen die an sich bekannten Verfahren bereit, beispielsweise die Abwicklung über die Telefonrechnung, wobei der Telefonbetreiber die Zentralstelle ist, die die Zuordnung der Mobilfunknummer zu personenbezogenen Inkassoinformationen vorhält, oder es können hierfür separate Voreinstellungen entweder im offline-payment-Server selbst oder in von diesem genutzten übergeordneten Zentralen erfolgen.

Die Moduleinheit dient also einerseits zur Abwicklung eines Ausgabevorganges durch Kommunikation mit dem Nutzer in der beschriebenen Weise, andererseits ermöglicht und steuert sie die Speicherung der Nutzungsvorgangs-Informationen, die Ausgabe dieser Informationen über entsprechende Schnittstellen, welche wie beschrieben berührungslose oder Standardschnittstellen sein können, und somit die Kombination mit einem offline-Transaktionsbetrieb.

Offline-payment-Server können für eine bestimmte Automatengruppe oder als übergeordnetes System ausgelegt sein, und der Bezug zu Inkassoinformationen der Nutzerperson kann direkt oder indirekt hergestellt sein. Will beispielsweise der Nutzer bestimmte Automatentypen nutzen, kann es sinnvoll und erforderlich sein, wenn er sich vorher bei der Betreiberzentrale so identifiziert, daß diese seine Mobilfunknummer direkt Inkassoinformationen, beispielsweise Kontonummer, Kreditkartennummern oder dergleichen einrichten kann. Auch können prepaid-Systeme genutzt werden, indem eine Zentralstelle ein Guthaben eines Nutzers, zugeordnet zu seiner Mobilfunknummer verwaltet. Andererseits können auch übergeordnete Zentralen die personenbezogenen Inkassoinformationen und die Mobilfunknummer des Nutzers verwalten und einer Vielzahl von offline-payment-Servern bei Bedarf bereitstellen.

Die Übermittlung der im Automaten gespeicherten Informationen kann im offline-Betrieb, beispielsweise durch Datenträgeraustausch oder dergleichen erfolgen, oder auch im online-Betrieb durch Auslesen des Automatenspeichers und Übermitteln der Informationen an die gewünschte Zentralstelle. In keinem Fall ist es erforderlich, daß der Automat zeitlich unbegrenzt und zum direkten Zweck der Nutzung in irgendeiner Form zu Zwecken der Datenkommunikation vernetzt sein muß.

Auch kann die Anwendung des erfindungsgemäßen Verfahrens von der zusätzlichen Verwendung einer persönlichen Identifikationsnummer abhängig gemacht werden. Mögliche Bedingungen hierfür sind vielfältig. So kann beispielsweise ein bestimmter Automatentyp und damit ein bestimmter Produktoder Nutzungstyp wegen des besonders hohen Wertes die zusätzliche Verwendung der Identifikationsnummer rechtfertigen. Weitere mögliche Bedingungen sind beispielsweise die zur Nutzung erforderlichen Beträge, Überschreitungen von Tageslimits, personenbezogene Vorgänge, wie beispielsweise erschwerte Inkassoabwicklungen, Tageszeiten, Diebstahlprofile, d. h. im wesentlichen statistisch ermittelte Diebstahlhäufigkeiten, Zufallsgeneratoren und schließlich auch die persönliche Entscheidung des Nutzers. Da der Automat und die Zentralstelle nicht in einer direkten Kommunikationsverbindung stehen, kann die Notwendigkeit der zusätzlichen Eingabe einer persönlichen Identifikationsnummer in dem Abwicklungscode als verschlüsselte Information hinterlegt sein, d. h., der automatenseitige Rechner kann durch Analyse des Abwicklungscodes erkennen, daß die zusätzliche Eingabe der persönlichen Identifikationsnummer erforderlich ist.

Der Abwicklungscode kann erfindungsgemäß eine Vielzahl von Informationen umfassen. Beispielsweise können konkrete freigegebene Beträge oder Betragsbereiche enthalten sein, Informationen wie PIN-Prüfung erforderlich oder nicht und dergleichen. Weiterhin ist der Abwicklungscode so gestaltet, daß der Automat die Richtigkeit des Codes in jedem Fall erkennen kann. So ist beispielsweise eine Identifikation vorgesehen, in welcher sich der Automat als Bestimmungsort erkennen kann, eine sogenannte Point-of-Sale-Identifikation (POS-ID). Sinnvoll ist auch ein Zeitsignal. Weiterhin sinnvoll kann der Abwicklungscode in verschlüsselter Weise eine auf die persönliche Identifikationsnummer bezogene Information umfassen, so daß der Automat direkt bei Eingabe der persönlichen Identifikationsnummer eine Abgleichreferenz zur Verfügung hat.

Die erfindungsgemäße Moduleinheit ist gemäß einem Vorschlag der Erfindung so ausgelegt, auf einer vorgegebenen Zeitbasis zu arbeiten. Zu diesem Zweck umfaßt sie erfindungsgemäß auch eine Einheit zur Uhrzeitnahestellung. Im einfachsten Fall kann es sich dabei um ein Funkuhrmodul handeln, so daß auf diese Weise eine verallgemeinerbare Zeitbasis gegeben ist. Auch kann eine völlig unabhängige Zeitbasis verwendet werden. In diesem Zusammenhang kann der Abwicklungscode eine Zeitinformation enthalten. Zentralseitig wird bei Übermittlung des Abwicklungscodes die aktuelle Zeit der Zentraluhr erfaßt und in den Code eingebaut. Automatenseitig kann bei Decodierung des Abwicklungscodes dann der Zeitraum zwischen der im Code enthaltenen Zeit einerseits und der automatenseitigen Zeit andererseits ermittelt und somit auf die Gültigkeit des Codes in Abhängigkeit vorgegebener Zeitintervalle geschlossen werden.

Ein Problem im Abgleich zwischen Zentrale und Automat kann sich dann ergeben, wen die Codierung eine Zeitinformation umfaßt, die automatenseitig anhand der Ist-Zeit überprüft wird. Ist die automatenseitige Uhr jedoch nicht genau oder jedenfalls nicht mit der zentralseitigen Uhr in Übereinstimmung, ergibt sich hier ein Interpretationsproblem. Aus diesem Grunde wird mit der Erfindung für die erfindungsgemäße Moduleinheit ein automatischer Zeitabgleich vorgeschlagen, mit welchem innerhalb bestimmter Zeitbereiche ein Nachstellen einer nicht in direkter Verbindung mit einer Zentralzeit stehenden Satellitenuhr einerseits erfolgen kann, andererseits eine vollständige, d. h. außerhalb eines Toleranzbereiches liegende Abweichung feststellbar sind. Im Falle der Feststellung kann beispielsweise eine Außerbetriebsetzung des Automaten bis zum nächsten Service erfolgen.

Dabei ist vorgesehen, daß in der Moduleinheit im Automaten, in der eine nicht mit einer Quelle verbundene Satellitenuhr geführt wird, ein Code eingegeben wird, welcher auch eine Zeitcodierung enthält. Durch die Decodierung erhält der Moduloder Automatenrechner einen Zeitpunkt, der der dem Zeitpunkt der Codierung unter Nutzung der nicht mit der Satellitenuhr verbundenen Zentraluhr entspricht. Diese erhaltene Zeit wird nun mit der sich aus der automatenseitigen Realzeit verglichen. Dabei wird von vorn herein ein Toleranzspektrum angelegt, welches in etwa der Zeitspanne entspricht, die notwendig ist, um eine Codierung an einen Nutzer zu übermitteln und durch den Nutzer in den Automaten einzugeben. Beispielsweise wird eine Zeitverzögerung von 10 Sekunden angesetzt. Liegen die Zeiten auseinander, wird gemäß dem erfindungsgemäßen Verfahren automatenseitig ein zweites, erweitertes Toleranzfeld verwendet, beispielsweise minus 20 Sekunden. Kommt es auch hier zu keiner Übereinstimmung, wird automatenseitig beispielsweise ein weiteres Toleranzfeld, z. B. minus 30 Sekunden verwendet. Liegen also Echtzeit und empfangene Zeit um die negativen Toleranzzeiträume auseinander, erkennt der Automat einen gültigen Code und kann entsprechend angesteuert werden. Hierbei kann das Erfordernis der angewendeten Toleranz statistisch erfaßt und ausgewertet werden. So ist der Automatenrechner in der Lage, festzustellen, daß regelmäßig eine große Toleranzgrenze verwendet werden muß, um eine Übereinstimmung zu finden. Somit weiß der Automat bzw. die Moduleinheit, daß die Satellitenuhr vorgeht und er kann diese beispielsweise um einen Toleranzfeldmittelwert justieren. Fällt jedoch auch bei mehrfacher Toleranzfeldänderung in den negativen Bereich keine Übereinstimmung an, wird gemäß der Erfindung wenigstens eine Übereinstimmungsprüfung in wenigstens einem positiven Toleranzfeld durchgeführt. Eine Übereinstimmung in diesem Bereich bedeutet, daß die Satellitenuhr gegenüber der Zentraluhr nachgeht, so daß alle empfangenen Zeiten in einem positiven Toleranzfeld, also in der zeitlichen Zukunft liegen. In diesem Fall kann der Rechner ebenfalls die Satellitenuhr durch vorstellen nachjustieren. Erst wenn weder in den negativen noch den positiven Toleranzfeldern Übereinstimmungen erzielbar sind, wird der Code als ungültig erkannt und dargestellt. Durch die statistische Erfassung solcher Vorgänge kann die Moduleinheit nach einer bestimmten Anzahl direkt aufeinanderfolgender, ungültiger Vorgänge erkennen, daß entweder Manipulationsversuche vorliegen oder seine Satellitenuhr dermaßen gegenüber der Zentraluhr verstellt ist, daß der Automatenrechner den Automaten als nicht betriebsbereit sperrt, so daß erst durch einen entsprechenden Service ein wieder Inbetriebsetzen erfolgt. Während des Service kann beispielsweise auch eine Satellitenuhrnachstellung erfolgen.

Um Fehler und Manipulationen ausschließen zu können, ist es erforderlich, daß sämtliche erfindungsgemäßen Moduleinheiten eine individualisierende Nummer haben. Daraus ergibt sich, daß ausgesprochen lange Automatennummern vergeben werden müßten. Es zeigt sich jedoch, daß die Erfindung hier auf einen praktischen Aspekt der Mobilfunknetze zurückgreifen kann, um somit in erfindungsgemäßer Weise einen Vorteil in der Ausgestaltung der Erfindung zu erlangen. Die Mobilfunknetze sind derart aufgebaut, daß sie gewählten Ziffern automatisch geographische Kennungen zuordnen, so daß auch bei der Vergabe weniger Ziffern umfassende Automatennummern dann eine Individualisierung gegeben ist, wenn nicht zwei Automaten gleicher Nummer im gleichen geographischen Bereich, ausgehend von der Mobilfunkaufteilung, angeordnet sind. Somit wird in erfindungsgemäßer Weise vorgeschlagen, als Automatennummern verkürzte Nummern zu verwenden, die in den Mobilfunknetzen automatisch um geographische Kennungen ergänzt werden.

Ein weiteres Problem, dem sich die vorliegende Erfindung stellt, ist das Problem des Wechsels der Sicherheitsschlüssel, die für die kryptologische Verschlüsselung im Zentralrechner einerseits und die kryptologische Entschlüsselung im Modul- bzw. Automatenrechner andererseits verwendet werden. Da Zentralrechner und Automatenrechner nicht in einer Kommunikationsverbindung stehen, also im Offline-Betrieb betrieben werden, ist es erforderlich, daß beide Rechner auf die gleichen Schlüssel zurückgreifen. Aus Sicherheitsgründen ist es andererseits jedoch erforderlich, die Schlüssel von Zeit zu Zeit zu wechseln, um die Ausforschbarkeit und Manipulierbarkeit des Systems ausschließen zu können.

Aus dem Stand der Technik bekannte Verfahren, Schlüsselwechsel zu bestimmten Zeitpunkten durchzuführen, haben nicht nur den Nachteil der leichteren Ausforschbarkeit, sondern enthalten auch das Problem, daß die Zentraluhr und die Satellitenuhr nicht regelmäßig identisch laufen, es also Zeitverzögerungen zwischen den beiden Schlüsselwechseln gibt, die zu Funktionsstörungen führen können.

Die Erfindung löst diese Probleme. Es wird dabei vorgesehen, daß dem dezentral betriebenen Modulrechner eine "Tabelle" vor Codierungsschlüsseln durch Einspeicherung bereitgestellt wird. Vom Startzeitpunkt an verwendet der Automatenrechner den ersten Schlüssel der Tabelle für die Decodierung erhaltener Codes. Dies wird solange durchgeführt, bis eine Decodierung einen nicht gültigen Code identifiziert. Daraufhin wird seitens des Automatenrechners der erhaltene Code nochmals entschlüsselt, wobei der nächstfolgende Schlüssel aus der Tabelle zur Anwendung kommt. Ergibt sich bei dieser Operation ein gültiger Code, wird der gerade verwendete Schlüssel fortan als neuer Schlüssel angewandt. Auf diese Weise kann somit ein Schlüsselwechsel, angeregt durch den Zentralrechner, zeitlich unabhängig seitens des Automatenrechners nachvollzogen werden, ohne daß beide zeitlich abgeglichen oder im Online-Betrieb sind. In dem Augenblick, wo der Automatenrechner erkennt, daß der nächstfolgende Code eine gültige Decodierung hervorbringt, ist dieser nächstfolgende Code der neue Startcode. Damit sind Wechsel von Sicherheitsschlüsseln praktisch völlig frei von zeitlichen Vorgaben, Regeln und dergleichen durchführbar, ohne daß sich Manipulationsmöglichkeiten, Ausforschungsmöglichkeiten oder dergleichen ergeben.

Die Eingabe der übermittelten Abwicklungscodes in den Automaten kann unter Verwendung eines Tastaturfeldes, gegebenenfalls auch dargestellt auf einem Touchscreen, oder alternativ auch berührungslos erfolgen, indem der Betreiber des Mobilfunkgerätes den empfangenen Code beispielsweise mittels einer blue tooth-Verbindung, Irda (Infrarot) oder dergleichen an den Automaten weitergibt. Dabei wird gemäß einem besonders vorteilhaften Vorschlag der Erfindung ein reduziertes Tastaturfeld bereitgestellt und gekoppelt mit der Entwicklung nur einen reduzierten Zahlensatz umfassender Codes. Beispielsweise kann das Tastaturfeld nur die Ziffern 1 bis 9 aufweisen, also keine 0. Die Codes werden dann so aufgebaut, daß die Eingabe einer 0 nicht erforderlich ist. Dies hat den besonderen Vorteil, daß Fehleingaben bzw. Bedienfehler vermieden werden. Da nahezu alle im Bereich des Automaten angezeigten und vom Nutzer anzuwählenden Telefonnummern mit einer 0 anfangen, kommt der Nutzer gar nicht erst auf die Idee, zu versuchen, über das automatenseitige Tastaturfeld eine Telefonnummernwahl durchzuführen. Vielmehr werden die mangelnde Eignung und damit auch der Bedienfehler automatisch erkannt.

Die Erfindung ermöglicht die Abkopplung der Automatennutzung von der Betreiberorganisation einerseits und dem Inkassovorgang andererseits. Der jeweils zu nutzende Automat ist eine stand-alone-Version. Es ergibt sich eine indirekte Verbindung zum offline-payment-Server durch die auf dem Automat lesbar identifizierte Telefonnummer. Die Kommunikation zwischen dem Nutzer und dem offline-payment-Server erfolgt unter Nutzung eines Mobilfunkendgerätes. Der vor Ort im Bereich des Automaten befindliche Nutzer kommuniziert seinerseits mit dem Automaten über eine direkte Eingabeschnittstelle, beispielsweise blue tooth oder Tastaturfeld. Eine indirekte Kopplung zwischen payment-Serversystem und Automat kann über oben erwähnte Schnittstellen hergestellt werden, wenn zum Beispiel Softwareupdates durchgeführt werden sollen, bei Übertragung von neuen Sicherheitsschlüsseln oder Abrechnungsdaten oder Synchronisation der Uhrzeit. Die Variabilität des Einsatzes vergrößert zugleich auch die Einsatzmöglichkeiten für Automaten. Die Erfindung ist anwendbar auf Warenausgabe- / Dienstleistungsautomaten, beispielsweise Tankstellensäulen, Zigarettenautomaten, Fahrausweisautomaten und dergleichen, kann jedoch bis hin zu Zahlungsabwicklungen in herkömmlichen Verkaufsstellen erweitert werden. So kann sich beispielsweise ein Käufer bei Betreten eines Supermarktes, Warenhauses oder dergleichen nach dem erfindungsgemäßen Verfahren einen Betrag freischalten lassen und an der Kasse nur noch durch Eingabe des empfangenen Abwicklungscodes den Bezahlungsvorgang abwickeln. Auch können Verkaufsörtlichkeiten direkt auf das Verfahren ausgerichtet werden.

Die Sicherheitsrisiken sind gemäß der Erfindung auf ein Minimum reduziert. Im Normalfall kann davon ausgegangen werden, daß bereits die Nutzung des Mobilfunkgerätes durch die erforderliche Eingabe ein PIN ausreichend gesichert ist. Ein Mißbrauch kommt also nur in Betracht, wenn ein Mobilfunkgerät in eingeschaltetem und freigegebenem Zustand durch einen unberechtigten Nutzer genutzt wird. Durch die Einrichtung von Tageslimits, die zusätzliche Anforderung der Eingabe von persönlichen Identifikatiosnummern, die Analyse statistisch ermittelter Diebstahlprofile und dergleichen kann jedoch dieses Risiko ebenfalls auf ein Minimum reduziert werden.

Die Erfindung wird durch eine Moduleinheit realisiert, welche die Kommunikationsmittel einerseits zur Kommunikation mit einem Benutzer andererseits mit dem eigentlichen Ausgabebereichs des Automaten in Form von Anzeigeeinheiten, Eingabeeinheiten, Schnittstellen und dergleichen bereitstellt, eine Umschaltung zwischen Ruhezustand und Betriebszustand ermöglicht und eine Steuerung sowohl für die Abwicklung der Kommunikation mit dem Benutzer und den Ausgabeeinheiten des Automaten als auch gemäß der Erfindung für die Nachsteuerung der Zeitbasis, die Verwendung kryptographischer Schlüssel einschließlich deren Wechsels ermöglicht. Die Moduleinheit ist bei herkömmlichen Automaten nachrüstbar und in neue Automaten integrierbar. Sofern im Rahmen der Anmeldung zwischen Rechnereinheiten und Speichereinheiten der Moduleinheit und des Automaten an sich differenziert wird, umfaßt dies die beiden Möglichkeiten, daß die Moduleinheit Schnittstellen zur Nutzung bereits vorhandener automatenseitiger Rechner- und/oder Speichereinheiten umfaßt oder eigene Rechner- und/oder Speichereinheiten aufweist. Die Moduleinheit ist mit geringem wirtschaftlichen Aufwand erstellbar und ermöglicht den Einsatz von Warenausgabe- / Dienstleistungsautomaten in der beschriebenen Weise, wodurch sich die Variabilität des Einsatzes solcher Vertriebsvorgänge erheblich erhöht.

Weitere Vorteile und Merkmale der Erfindung ergeben sich aus der folgenden Beschreibung anhand der Figur. Dabei zeigt:
- Fig. 1: eine schematisierte Darstellung eines Ablaufdiagramms für die Nutzung eines Fahrausweisautomaten,
- Fig. 2: Blockschaltbild einer möglichen Moduleinheit,
- Fig. 3: eine beispielhafte Darstellung einer Benutzeroberfläche einer Moduleinheit,
- Fig. 4: eine weitere beispielhafte Darstellung einer Benutzeroberfläche einer Moduleinheit.

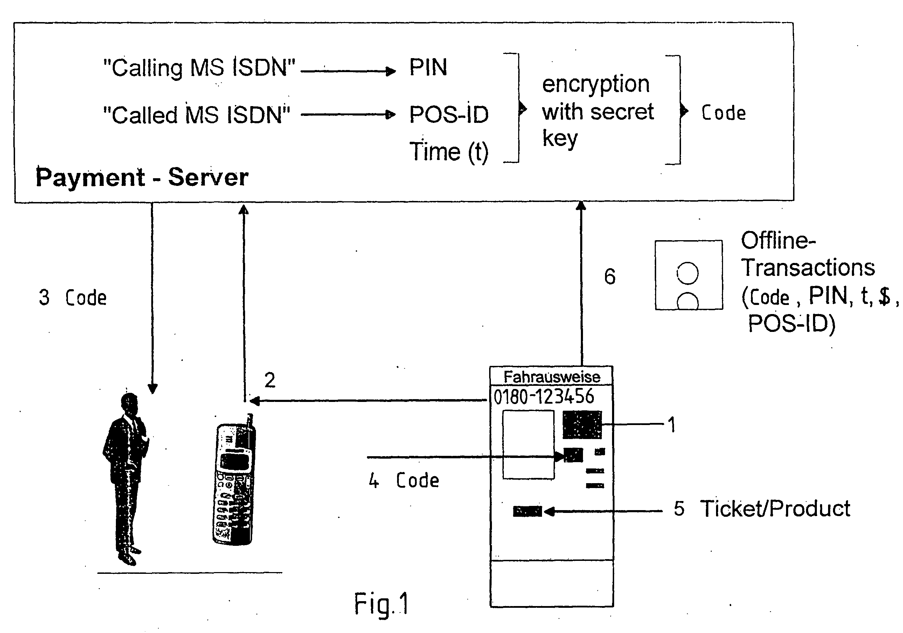

In Fig. 1 ist ein Fahrausweisautomat gezeigt, welcher gut lesbar eine Telefonnummer identifiziert. Auf einem Auswahlfeld 1, beispielsweise einem Touchscreen, wählt der Nutzer die Zahlform aus. Entscheidet er sich für die erfindungsgemäße Zahlungsform, stellt sich der Automat für eine gewisse Zeit auf die Eingabe eines Abwicklungscodes ein. Der Nutzer wählt mittels des Mobilfunkgerätes, dargestellt durch ein Handy, die auf dem Automaten angegebene Telefonnummer und übermittelt über ein Mobilfunknetz seine Telefonnummer an einen offline-payment-Server. Der offline-payment-Server ermittelt für den beabsichtigten Nutzungsvorgang, der ihm durch die angewählte Telefonnummer bekannt ist, den Abwicklungscode und übermittelt diesen beispielsweise mittels SMS, Sprachansage, WAP oder dergleichen an das Mobilfunkgerät des Nutzers, gekennzeichnet durch das Bezugszeichen 3. Der Nutzer überträgt den empfangenen Abwicklungscode in das am Automaten bereitgehaltene Tastaturfeld, welches auch ein Touch Screen sein kann, gekennzeichnet durch Bezugszeichen 4. Optional kann die zusätzliche Eingabe einer personenbezogenen Identifikationsnummer erforderlich sein. Der Automat wird nun für die gewünschte Benutzung freigegeben, d. h. der Nutzer kann im Falle des gezeigten Ausführungsbeispiels nunmehr einen Fahrausweis entnehmen, bezeichnet durch Bezugszeichen 5. Hier kann er entweder einen freigegebenen Betrag verbrauchen oder in Abhängigkeit vom Abwicklungscode den Vorgang je nach Erfordernis abschließen. Nach der Ausgabe ist der Nutzungsvorgang für den Nutzer beendet. Im Automaten sind der Abwicklungscode oder daraus ermittelte Informationen sowie die den direkten Nutzungsvorgang betreffenden Informationen gespeichert. Aus dem Abwicklungscode kann der Automat zunächst vor der Freigabe die Zulässigkeit des Codes ermitteln, indem er beispielsweise die POS-ID entschlüsselt, optional die zusätzliche Prüfung der persönlichen Identifikationsnummer durchführt, ein Zeitsignal entschlüsselt und/oder setzt und dergleichen.

Mit 6 ist dann die Vorbereitung zur Abwicklung eines Inkassovorgangs gekennzeichnet, dargestellt durch eine Diskette. Die Art des Auslesens der Informationen aus dem Speicher des Automaten und die Übermittlung an die jeweilige Zentralstelle zur Abwicklung des Inkassovorgangs sind dabei variabel und können im offline-Betrieb oder im online-Betrieb erfolgen, wobei der online-Betrieb nur kurzzeitig und zweckgebunden hergestellt werden muß.

Bei diesem Ausführungsbeispiel ist auch ein Beispiel für die zentralseitige Zusammenstellung eines Abwicklungscodes gezeigt. Aus der angewählten Telefonnummer, bezeichnet mit "called MS ISDN" ermittelt die Zentrale die POS-ID und den Zeitpunkt. Aus der Analyse der anrufenden Mobilfunknummer, bezeichnet mit "calling MS ISDN" ermittelt die Zentrale die persönlichen Identifikationsdaten des Nutzers. Über diese persönlichen Identifikationsdaten kann die Zentrale aus einer Datenbank die erforderlichen Informationen wie Betragslimits, Erfordernis der zusätzlichen Eingabe einer persönlichen Identifikationsnummer, Sperrhinweise und dergleichen ermitteln. Aus der POS-ID kann die Zentrale weiterhin Verfallslimits und dergleichen festlegen. Aus den zusammengetragenen Informationen wird eine Abwicklungscodierung zusammengestellt und verschlüsselt, bezeichnet mit "encryption with secret key". Hierbei können je Zahlstelle (POS-ID) individuelle, also verschiedene, geheime Schlüssel zum Einsatz kommen. Die daraus sich ergebende Abwicklungscodierung wird im Schritt 3 beispielsweise per SMS an den Nutzer übertragen. Nach in der oben beschriebenen Weise abgewickelter Nutzung hält der Rechner des Automaten die Transaktionsinformationen bereit, beispielsweise den Abwicklungscode, optional die persönliche Identifikationsnummer, Zeitpunkt, Betrag und die POS-ID. Weitere oder alternative Informationen wie beispielsweise Wareninformationen für statistische Auswertungen und dergleichen können aufgenommen sein.

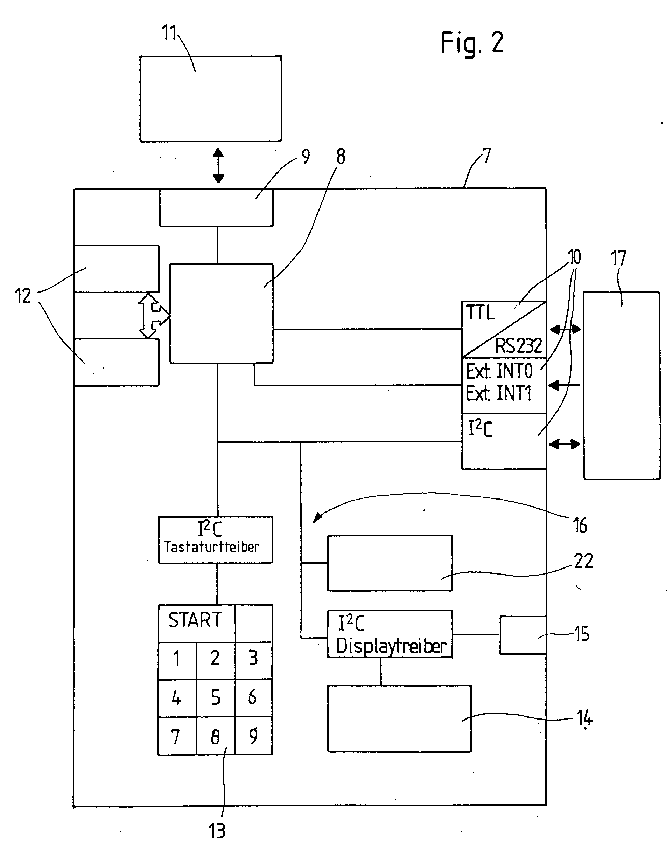

In der Fig. 2 ist ein Blockschaltbild einer erfindungsgemäßen Moduleinheit 7 dargestellt. Die Moduleinheit 7 besitzt eine Softwaresteuerung 8, in der die zur Steuerung der wesentlichen Betriebsabläufe eingehenden Signale verarbeitet werden. Schnittstellen zum Einbringen von Daten und Informationen sind eine äußere Schnittstelle 9 zur Kommunikation mit einem Mobilfunkendgerät, Notebook oder dergleichen, gekennzeichnet durch das Bezugszeichen 12, z. B. zur Ein- und Ausgabe von Wartung oder Nutzung des Automaten 17 betreffende Daten, sowie eine innere Schnittstelle 10 zur Kommunikation mit anderen Teilen des Automaten 17, z. B. Ausgabeeinheiten, Drucker o. ä. Zur Speicherung von Daten kann die Steuerung dee Moduleinheit 7 auf Speicher 12 zurückgreifen. Zur Kommunikation mit dem Benutzer verfügt die Moduleinheit 7 über eine Tastatur 13 als Eingabeeinheit und ein Display 14, sowie eine LED -Anzeige 15, um einen möglichen Nutzer auf sich aufmerksam zu machen, als Ausgabeeinheiten. Zur Datenübertragung innerhalb der Moduleinheit 7 wird ein Bussystem eingesetzt, hier ein I²C-BUS 16. Zu erkennen ist weiterhin eine Einheit zur Uhrzeitnahestellung 22, durch die die Erfindung auf einer vorgegebenen Zeitbasis arbeitet. Im einfachsten Fall kann es sich dabei um ein Funkuhrmodul handeln.

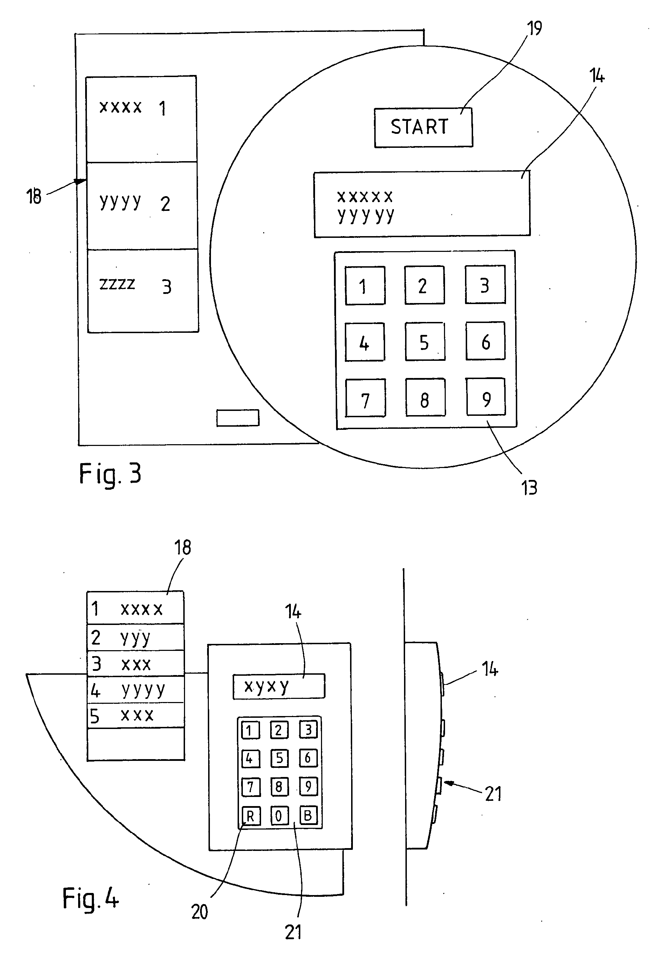

In Fig. 3 und Fig. 4 sind zwei mögliche Ausführungsformen der Benutzeroberfläche der Moduleinheit 7 bildhaft dargestellt. In beiden Beispielen ist eine schematische Bedienungsanleitung 18 zur Benutzung des Automaten 17 dargestellt. Man erkennt die Tastatur 13 (in Fig.3) und die Tastatur 21 (in Fig. 4) als Eingabeeinheit und das Display 14 als LCD-Anzeige. Eine besonders vorteilhafte Ausführung der Tastatur 13 ist in Fig. 3 dargestellt: Es handelt sich hier um eine Tastatur, auf der die Taste für die Ziffer 0 nicht vorhanden ist. Die Codes werden dann so aufgebaut, daß die Eingabe einer 0 nicht erforderlich ist. Auf diese Weise werden Fehleingaben und Bedienfehler vermieden, da der Benutzer auf dieser Tastatur 13 versucht, die Telefonnummer zur Kommunikation mit dem Zentralrechner zu wählen kann, da diese Rufnummern in der Vorwahl immer eine 0 enthalten. Die Tastatur 13 kann somit nur zur Eingabe der vom Zentralrechner übermittelten Codierung verwendet werden. Um die Moduleinheit 7 vom Ruhe- in den Betriebszustand zu versetzen, betätigt der Benutzer bei dem in Fig. 3 dargestellten Ausführungsbeispiel die "Start-Taste" 19. In dem in Fig. 4 dargestellten Ausführungsbeispiel dient hierzu die "R-Taste" 20 der Tastatur 21.

Das beschriebene Ausführungsbeispiel dient nur der Erläuterung und ist nicht beschränkend.

### Bezugszeichenliste

- 1: Zahlungsformauswahl
- 2: Anruf an Zentrale
- 3: Übermittlung des Abwicklungscodes
- 4: Eingabe des Abwicklungscodes
- 5: Nutzung
- 6: Informationstransaktion für Inkasso
- 7: Moduleinheit
- 8: Softwaresteuerung
- 9: äußere Schnittstelle
- 10: innere Schnittstelle
- 11: Mobilfunkendgerät
- 12: Speicher
- 13: Tastatur ohne Nullziffer
- 14: Display
- 15: LED - Anzeige
- 16: I2C - Bussystem
- 17: Warenaugabe- / Dienstleistungsautomat
- 18: Bedienungsanleitung
- 19: Start - Taste
- 20: R - Taste
- 21: Tastatur mit Nullziffer
- 22: Einheit zur Uhrzeitnahestellung

## Patentansprüche

1. Moduleinheit für Warenausgabe- / Dienstleistungsautomaten, die von einer Bedienperson unter Nutzung eines Mobilfunkendgerätes zur Kommunikation mit einer Zentralstelle und Verwendung einer übermittelten Codierung betreibbar sind, umfassend eine Displayeinheit, eine Eingabeeinheit, eine Schnittstelle für eine Rechner- und/oder Speichereinheit.

2. Moduleinheit nach Anspruch 1, **dadurch gekennzeichnet, daß** diese über eine Aktivierungseinheit, welche bei Betätigung die Moduleinheit von einem Ruhezustand in einen Betriebszustand schaltet, verfügt.

3. Moduleinheit nach Anspruch 1, **dadurch gekennzeichnet, daß** die Displayeinheit eine zweizeilige Digitalanzeige ist.

4. Moduleinheit nach Anspruch 1, **dadurch gekennzeichnet, daß** die Displayeinheit ein Monitor ist.

5. Moduleinheit nach einem der vorhergehenden Ansprüche, **dadurch gekennzeichnet, daß** die Eingabeeinheit durch eine Tastatur gebildet ist.

6. Moduleinheit nach einem der vorhergehenden Ansprüche, **dadurch gekennzeichnet, daß** die Displayeinheit und die Eingabeeinheit durch einen Touchscreen gebildet sind.

7. Moduleinheit nach einem der vorhergehenden Ansprüche, **dadurch gekennzeichnet, daß** ein Tastaturfeld mit reduziertem Ziffernumfang gebildet wird.

8. Moduleinheit nach einem der vorhergehenden Ansprüche, **dadurch gekennzeichnet, daß** die Eingabeeinheit durch eine Mouseeinheit gebildet ist.

9. Moduleinheit nach einem der vorhergehenden Ansprüche, **dadurch gekennzeichnet, daß** eine Rechnereinheit in die Modulbaugruppe integriert ist.

10. Moduleinheit nach einem der vorhergehenden Ansprüche, **dadurch gekennzeichnet, daß** eine Speichereinheit in die Modulbaugruppe integriert ist.

11. Moduleinheit nach einem der vorhergehenden Ansprüche, **dadurch gekennzeichnet, daß** diese eine Kommunikationsschnittstelle für die interne Kommunikation mit Automateneinheiten aufweist.

12. Moduleinheit nach einem der vorhergehenden Ansprüche, **dadurch gekennzeichnet, daß** die Aktivierungseinheit durch wenigstens eine Taste gebildet ist.

13. Moduleinheit nach einem der vorhergehenden Ansprüche, **dadurch gekennzeichnet, daß** die Aktivierungseinheit durch einen Touchscreen gebildet ist.

14. Moduleinheit nach einem der vorhergehenden Ansprüche, **dadurch gekennzeichnet, daß** die Aktivierungseinheit einen Näherungssensor umfaßt.

15. Moduleinheit nach einem der vorhergehenden Ansprüche, **dadurch gekennzeichnet, daß** diese eine Infrarotschnittstelle aufweist.

16. Moduleinheit nach einem der vorhergehenden Ansprüche, **dadurch gekennzeichnet, daß** diese wenigstens eine Standardschnittstelle aufweist.

17. Moduleinheit nach einem der vorhergehenden Ansprüche, **dadurch gekennzeichnet, daß** diese optische und/oder akustische Reizmittel zur Erregung von Aufmerksamkeit aufweist.

18. Moduleinheit nach einem der vorhergehenden Ansprüche, **dadurch gekennzeichnet, daß** diese in einem gekapselten Gehäuse untergebracht ist.

19. Moduleinheit nach einem der vorhergehenden Ansprüche, **dadurch gekennzeichnet, daß** diese eine Softwaresteuerung zur Betriebsabwicklung umfaßt.

20. Moduleinheit nach einem der vorhergehenden Ansprüche, **dadurch gekennzeichnet, daß** diese eine kryptographische Sicherheitseinheit umfaßt.

21. Moduleinheit nach Anspruch 21, **dadurch gekennzeichnet, daß** die kryptographische Sicherheitseinheit einen Wechsel des kryptographischen Schlüssels aufgrund von Vorgaben selbständig durchführt.

22. Moduleinheit nach einem der vorgenannten Ansprüche, **dadurch gekennzeichnet, daß** die Möglichkeit besteht, bei einer Vielzahl von Modulen der kryptographischen Sicherheitseinheit je Modul einen separaten / eigenen kryptographischen Schlüssel zuzuordnen.

23. Moduleinheit nach einem der vorgenannten Ansprüche, **dadurch gekennzeichnet, daß** diese auf eine eigene Zeitbasis Bezug nimmt.

24. Moduleinheit nach einem der vorhergehenden Ansprüche, **dadurch gekennzeichnet, daß** diese eine Steuerung zur automatischen Zeitnachstellung aufweist.

25. Moduleinheit nach einem der vorhergehenden Ansprüche, **dadurch gekennzeichnet, daß** die Steuerung zur automatischen Zeitnachstellung von der Moduleinheit in Abhängigkeit von dem eingegebenen Code justiert wird.
